# EUROPÄISCHE PATENTSCHRIFT

(11) **EP 2 567 619 B1**
(45) Veröffentlichungstag und Bekanntmachung des Hinweises auf die Patenterteilung: **24.06.2020**
(21) Anmeldenummer: 11007303.8
(22) Anmeldetag: 08.09.2011
(51) Int. Cl.: A22C 13/00

(54) **Rauchimprägnierte Lebensmittelhüllen auf Basis von Cellulose**
Smoke-impregnated food casings on the basis of cellulose
Emballages d'aliments imprégnés de fumée à base de cellulose

(43) Veröffentlichungstag der Anmeldung: 13.03.2013
(73) Patentinhaber: CaseTech GmbH, 29699 Bomlitz (DE)
(72) Erfinder: Henze-Wethkamp, Heinrich, 29664 Walsrode (DE); Krallmann, Anton, 29862 Bad Fallingbostel (DE)
(74) Vertreter: Godemeyer Blum Lenze Patentanwälte Partnerschaft mbB - werkpatent

(56) Entgegenhaltungen:
- WO-A1-01/41576
- JP-A- 2010 142 169
- US-A- 4 518 619
- US-A- 4 620 000
- S. C. PAN ET AL: "Separation of Acetylated Neomycins B and C by Paper Chromatography", ANALYTICAL CHEMISTRY, Bd. 28, Nr. 5, 1. Mai 1956 (1956-05-01), Seiten 836-838, XP55017499, ISSN: 0003-2700, DOI: 10.1021/ac60113a017

## Beschreibung

Die vorliegende Erfindung betrifft rauchimprägnierte Lebensmittelhüllen auf Basis von Cellulose sowie Verfahren zur Verminderung von Verfärbungen auf und in der Oberfläche derartiger Lebensmittelhüllen. Verwendet werden dabei Hüllen aus reiner Cellulose wie auch solche mit einer zusätzlichen Faserpapierverstärkung im Innern (sogenannte Faserhüllen). Weiterhin kann der Cellulosefaserdarm mit einer zusätzlichen Sperrschicht in Form einer PVDC-Lackierung ausgerüstet sein. Auch können textile Schlauchhüllen mit Cellulose (Textildarm) eingesetzt werden. Die genannten Hüllen sind mit Flüssigrauch imprägniert worden.

Das Räuchern wird bei Rohwürsten traditionell aus hygienischen. Gründen durchgeführt. Außerdem ist ein Räuchergeruch und Räuchergeschmack der Wurst in vielen Anwendungen verkaufsfördernd. Die traditionellen Räucherverfahren können durch das Ausrüsten der Hülle mit Flüssigrauch ersetzt werden.

Zum Übertrag von Rauchgeschmack und -geruch auf Wurstwaren gibt es neben den Verfahren der traditionellen Räucherung und der Räucherung mit Hilfe von Flüssigrauch die Möglichkeit, Wursthüllen direkt mit Flüssigrauch zu imprägnieren. Die Wursthüllen übertragen dann während des Reife- oder Garprozesses die Farb-, Geruchs- und Geschmacksstoffe auf das Füllgut. Zusätzlich zu der sensorischen Veredelung der Wurstwaren dient der Rauchübertrag hygienischen Zwecken. Schimmel und unerwünschte Bakterien werden durch fungizid und bakterizid wirksame Rauchbestandteile im Wachstum gehemmt oder abgetötet.

Die gewünschte Braunverfärbung der Brätoberfläche wird vor allem durch die Maillard-Reaktion bewirkt. Im Fall von (Flüssig-) Rauch sind dies Carbonylverbindungen, die mit den Aminosäuren der Proteine im Wurstbrät reagieren. Eine weitere Ursache der Braunverfärbung liegt in der Eigenfarbe der bei der Rauchherstellung gebildeten primären und sekundären Pyrolyseprodukte. Bei flüssigrauchimprägnierten Wursthüllen sind die Verfärbungen besonders stark ausgeprägt. Flüssigrauch wird durch die kontrollierte Pyrolyse von Holzmaterial und eine sich anschließende Kondensation von Rauchbestandteilen mit Wasser gewonnen. In weiteren Herstellungsschritten wird der kondensierte Rauch gereinigt und nach Bedarf aufkonzentriert. Der Prozess der Flüssigrauchherstellung wurde bereits in einer Vielzahl von Patenten beschrieben. Die Flüssigrauchsorten besitzen hellbraune bis sehr dunkle bzw. schwarze Eigenfarben.

Im Stand der Technik sind zahlreiche Verfahren zur Herstellung von flüssigrauchimprägnierten Wursthüllen beschrieben. Der Flüssigrauch dient dabei sowohl als farb- wie auch geschmacksgebende Substanz für Wurstwaren (US 4604309, US 4442868, US 4518619 und US 4446167). Häufig wird in den Patenten die Anwendung von basischem Flüssigrauch beschrieben, dem eine wesentlich stärkere Farbgebung zugeschrieben wird als saurem Flüssigrauch (US 6032701).

Rauchimprägnierte Darmsorten haben immer wieder Probleme mit dem Auftreten von schwarzen Flecken innerhalb der Darmoberfläche. Die schwarzen Flecke sind eine Farbreaktion zwischen den phenolischen Anteilen der Rauchmischung und den vorhandenen Metallionen im Darm selber. Diese Metallionen können durch Kontakt mit Metallwalzen auf oder in die Schlauchhülle oder im Verlauf der Herstellung der Viskose in den Darm gelangen. Die Verfärbungen sind nicht direkt nach dem Auftrag der Rauchlösung zu dem Darm sichtbar, sondern treten erst nach einiger Zeit hier Tage auf. So können einzelne Tage bis zu mehreren Wochen vergehen bevor diese Reaktion in Form von schwarzen Flecken in der Größe von 1 bis 10 mm oder mehr mm sichtbar wird.

In dem Patent US 4500576 von Union Carbide (eingereicht 1983) mit dem Titel: "Inhibition of discoloration on cellulose food casings" wurde auf verschiedene Weise versucht, das Fleckenproblem zu lösen. Aus dieser Schrift ist bekannt, dass insbesondere Trinatriumphoshat neben EDTA als Komplexbildner fungieren kann und somit zur Vermeidung der Farbreaktion zwischen dem Phenolanteil der Rauchmischung und den Eisenionen im Cellulosefaserdarm beitragen kann. Nach dieser Patentschrift kann eine Zugabe von Trinatriumphoshat zum Rauch die Anzahl der Flecken reduzieren.

Der Einsatz von Trinatriumphoshat ergibt bei der Konfektionierung folgendes Problem: In Wasser kann max. 10 Gew.-% Trinatriumphosphat gelöst werden.

Im Falle einer Flüssigrauchzusammensetzung auf öliger Basis kann die Rauchmischung in der Regel maximal 5 Gew.-% Wasser mit Zusatz aufnehmen.

Bei höheren Konzentrationen an Wasser in der öligen Rauchmischung ergeben sich Entmischungen und die Rauchmischung fällt aus. Eine Möglichkeit eine etwas größere Menge an Phosphat auf bzw. in die Nahrungsmittelhülle zu übertragen besteht darin, die trinatriumphosphathaltige Rauchmischung auf beiden Seiten der Hülle aufzutragen. Dies ist mit dem Nachteil eines zusätzlichen Arbeitsschrittes verbunden. Auch ist die Wirksamkeit des Trinatriumphosphats auf der Außenseite längst nicht so groß wie auf der Innenseite der Nahrungsmittelhülle.

Es bestand daher die Aufgabe, eine gleichmäßig eingefärbte Nahrungsmittelhülle auf Basis von Cellulose zur Verfügung zu stellen, die Räucheraroma und Räuchergeschmack auf ein darin befindliches Nahrungsmittel übertragen kann. Weiter soll die eingefärbte Nahrungsmittelhülle auf Basis von Cellulose eine sehr gleichmäßige Einfärbung und keine oder möglichst wenige optische Defekte besitzen. Optische Defekte können schwarze Flecke sein, die nach dem Auftragen der der Flüssigrauchzusammensetzung entstehen. Die gefüllten Würste sollen nach Entfernen der Cellulosefaserdarm eine sehr gleichmäßige Farbe auf der Oberfläche der Würste aufweisen. Wünschenswert wäre zudem, wenn die Aufgabe mit möglichst wenigen (zusätzlichen) Arbeitsschritten bei der Herstellung der rauchimprägnierten Wursthüllen gelöst werden kann.

Gelöst wird die Aufgabe mit Hilfe einer Flüssigrauchmischung, die neben den dominierenden geschmacks- und farbgebenden Komponenten noch ein spezielles Phosphat, nämlich Dikaliumhydrogenphosphat, enthält.

Gegenstand der vorliegenden Erfindung ist somit eine schlauchförmige cellulosebasierte Lebensmittelhülle behandelt mit einer Zusammensetzung enthaltend Flüssigrauch mit den technischen Merkmalen des Anspruchs 1.

Der erfindungsgemäße Vorteil liegt nun darin, dass in Wasser nicht nur der max. Anteil von 10 Gew.-% Trinatriumphosphat gelöst werden kann, sondern bis zu 25 Gew.-% oder mehr Dikaliumhydrogenphosphat. Der Anteil an Phosphat-Ionen als Komplexbildner in der Flüssigrauchzusammensetzung kann somit signifikant erhöht werden, insbesondere im Falle überwiegend öliger Rauchmischungen in denen naturgemäß die wasserlöslichen Phosphate nicht gut löslich sind.

In einer bevorzugten Ausführungsform der Erfindung enthält die Zusammensetzung mit der die Lebensmittelhülle behandelt wird, mindestens ein Feuchthaltemittel ausgewählt aus Propandiol, Glycerin und Polysorbaten. Ein Feuchthaltemittel kann eingesetzt werden, um einem klebrig werden der Flüssigrauch enthaltenden Zusammensetzung entgegenzuwirken. Dabei sind in der Regel bis zu 15 Gew.-%, bevorzugt 5-12 Gew.-%, Polysorbate oder bis zu 30 Gew.-%, bevorzugt 15-25 Gew.-%, Propandiol oder Glycerin ausreichend, um die gewünschte Wirkung zu erzielen. Der Einsatz von 15-25 Gew.-% Propandiol bezogen auf die Flüssigrauch enthaltende Zusammensetzung ist besonders bevorzugt.

Ebenfalls bevorzugt ist, wenn die Flüssigrauch enthaltende Zusammensetzung der erfindungsgemäßen Lebensmittelhülle einen pH-Wert von 4 bis 7, bevorzugt einen pH-Wert von 5 bis 6, aufweist. Da kommerziell erhältliche Flüssigrauchmischungen, die als Basis für die erfindungsgemäß verwendeten Zusammensetzungen eingesetzt werden, von sich aus in der Regel einen niedrigen pH-Wert aufweisen, wird der pH-Wert der Zusammensetzung durch basische Mittel, üblicherweise durch NaOH, angehoben bzw. eingestellt. Durch die erfindungsgemäße Verwendung von Dikaliumhydrogenphosphat kann nun in vorteilhafter Weise die Menge an z.B. NaOH als basisches Mittel verringet werden.

Der in der erfindungsgemäß verwendeten Zusammensetzung enthaltene Flüssigrauch umfasst als Hauptbestandteil eine ölige Phase. Als weitere Bestandteile enthält der Flüssigrauch kondensierten Holzrauch, der in der öligen Phase oder beim Vorliegen sowohl einer öligen als auch einer wässrigen Phase gegebenenfalls in beiden Phasen gelöst ist.

Wie oben schon erwähnt, ist die Lebensmittelhülle dadurch gekennzeichnet, dass der Hauptbestandteil des Flüssigrauchs eine ölige Phase ist.

Die Zusammensetzung der erfindungsgemäßen Lebensmittelhülle ist auf der Innenseite der Hülle aufgetragen. Dabei kann die Zusammensetzung in die Innen- und/oder Außenseite der Hülle zumindest teilweise, gegebenenfalls auch vollständig eingezogen sein. In einer bevorzugten Ausführungsform wird die Zusammensetzung nur auf der Innenseite der Hülle aufgetragen, um sich den zusätzlichen Arbeitsschritt des außenseitigen Auftragens zu ersparen. Dieser Vorteil lässt sich bei der Verwendung anderer Phosphate als Dikaliumhydrogenphosphat nur schwer oder nicht erzielen, da mit Dikaliumhydrogenphosphat deutlich höhere Konzentrationen an Phosphat insbesondere in öligen Rauchmischungen bereitgestellt werden können.

In einer bevorzugten Ausführungsform der Erfindung kann die Zusammensetzung zwar ein oder mehrere andere Phosphate enthalten, das Verhältnis Gew.-% von Dikaliumhydrogenphosphat (K₂HPO₄) zur Summe der Gew.-% der ein oder mehreren anderen Phosphate (berechnet jeweils als Anhydrat, also etwa K₃PO₄, KH₂PO₄, Na₃PO₄, Na₂HPO₄ und/oder NaH₂PO₄) sollte jedoch größer 1 sein, wobei die Gew.-% jeweils auf die Zusammensetzung bezogen sind. Die Zusammensetzung kann auch gar keine anderen Phosphate außer Dikaliumhydrogenphosphat enthalten.

In einer typischen und bevorzugten Ausführungsform der Erfindung enthält die Zusammensetzung 2 bis 10 Gew.-%, bevorzugt 4 bis 8 Gew.-%, Wasser und 1 bis 5 Gew.-%, bevorzugt 2 bis 4 Gew.-%, Dikaliumhydrogenphosphat (im Falle der Verwendung von Hydraten berechnet als K₂HPO₄) in gelöster Form, wobei das Gewichtsverhältnis Wasser zu Dikaliumhydrogenphosphat zwischen 85:15 und 65:35, bevorzugt zwischen 80:20 und 70:30 Gew.-%, liegt.

Die erfindungsgemäße schlauchförmige cellulosebasierte Lebensmittelhülle kann insbesondere ausgewählt sein aus Cellulosedarm, Cellulosefaserdarm oder cellulsosebasiertem Textildarm.

In einer besonderen Ausführungsform der Erfindung kann die Lebensmittelhülle mehrschichtig sein. Dabei kann die Lebensmittelhülle ein oder mehrere Schichten mit wasserdampfsperrenden Eigenschaften aufweisen, die bevorzugt eine Durchlässigkeit von kleiner 50 g/m²d, bevorzugt kleiner 40 g/m²d, aufweisen, gemessen nach DIN/EN ISO 15106 bei 85% r.F. und 23 °C, und/oder ein oder mehrere Schichten mit sauerstoffsperrenden Eigenschaften, die bevorzugt eine Durchlässigkeit von kleiner 50 cm³/m²d·bar, bevorzugt kleiner 40 cm³/m²d·bar, aufweisen, gemessen nach DIN 53380 bei 75% r.F. und 23 °C.

Ein nicht erfindungsgemäßes Verfahren zur Verminderung von Verfärbungen auf und in der Oberfläche einer schlauchförmigen cellulosebasierten Lebensmittelhülle ist auch vorgesehen, wobei die Innen- und/oder Außenseite der Lebensmittelhülle, bevorzugt nur die Innenseite der Lebensmittelhülle, mit einer Zusammensetzung enthaltend Flüssigrauch behandelt wird, und wobei der Zusammensetzung Dikaliumhydrogenphosphat (K₂HPO₄ oder dessen Hydrate) zugesetzt wird.

Wie oben bereits erwähnt, kann der Zusammensetzung mit der die Lebensmittelhülle behandelt wird mindestens ein Feuchthaltemittel ausgewählt aus Propandiol, Glycerin und Polysorbaten, bevorzugt in den oben genannten Mengen, zugesetzt werden, um einem klebrig werden der Flüssigrauch enthaltenden Zusammensetzung entgegenzuwirken. Der Einsatz von 15-25 Gew.-% Propandiol bezogen auf die Flüssigrauch enthaltende Zusammensetzung ist besonders bevorzugt.

Bezüglich des pH-Wertes ist bevorzugt, wenn die Flüssigrauch enthaltende Zusammensetzung der erfindungsgemäßen Lebensmittelhülle einen pH-Wert von 4 bis 7, bevorzugt einen pH-Wert von 5 bis 6, aufweist bzw. in diesem Bereich eingestellt wird.

In einer bevorzugten Ausführungsform wird das Verfahren so durchgeführt, dass die Zusammensetzung 2 bis 10 Gew.-%, bevorzugt 4 bis 8 Gew.-%, Wasser und 1 bis 5 Gew.-%, bevorzugt 2 bis 4 Gew.-%, Dikaliumhydrogenphosphat (im Falle der Verwendung von Hydraten berechnet als K₂HPO₄) in gelöster Form enthält, wobei das Gewichtsverhältnis Wasser zu Dikaliumhydrogenphosphat zwischen 85:15 und 65:35, bevorzugt zwischen 80:20 und 70:30 Gew.-%, beträgt. Dazu werden typischerweise ein kommerziell erhältlicher Flüssigrauch auf öliger Basis und eine wässrige Dikaliumhydrogenphosphat-Lösung gemeinsam mit den gegebenenfalls vorgesehenen weiteren Bestandteilen so homogen miteinander vermischt bzw. gelöst, dass eine Zusammensetzung wie oben genannt erhalten wird.

Ein weiterer Gegenstand der vorliegenden Erfindung ist die Verwendung von Dikaliumhydrogenphosphat (K₂HPO₄ oder dessen Hydrate) als Bestandteil einer schlauchförmigen cellulosebasierten Lebensmittelhülle, die mit einer Zusammensetzung enthaltend Flüssigrauch behandelt ist, wobei das Dikaliumhydrogenphosphat in der Zusammensetzung enthalten ist.

Das Dikaliumhydrogenphosphat kann auch in einem Extraschritt vor dem Raffen in Form einer Dikaliumhydrogenphosphat -Lösung und optional enthaltend weitere Bestandteile der oben beschriebenen Zusammensetzung aufgebracht werden, gefolgt vom Aufbringen des Flüssigrauchs und der nicht zunächst aufgetragenen Zusammensetzungsbestandteile. Nach dem Auftragen kann die Schlauchhülle in üblicher Weise und mit den üblichen, bekannten Methoden gerafft werden.

Die Schlauchhülle kann optional ein oder mehrere Sperrschichten gegen Wasser und/oder gegen Sauerstoff aufweisen.

Eine typische Mischung für die Imprägnierung der Innenseite kann aus folgenden Bestandteilen bestehen: a) 15-76 Gew.-% eines natürlichen Raucharomas als Flüssigrauch, der aus frisch entwickeltem Rauch aus naturbelassenen Harthölzer hergestellt wird, mit einem pH-Wert von ca. 2,2-3,2, einem Raucharomagehalt von 22-30 mg/ml und einem Carbonylgehalt von 25-35 % (z.B. RA ® Enviro 24 von dem Hersteller Red Arrow), b) 10-30 Gew.-% Propandiol, c) 3-8 Gew.-% einer 10-70 %igen wässrigen Dikaliumhydrogenphosphat-Lösung und d) 0,5-5 Gew.-% einer 20-80 %igen wässrigen Natronlauge.

Die so hergestellten rauchimprägnierten Schlauchfolien eignen sich besonders für Würstchen-, Kochschinken- oder Brühwurstanwendungen, da mit diesem Darm das Räuchern in einer Räucherkammer entfallen kann.

### Beispiele

Die Beispiele und Vergleichsbeispiele in Tabelle 1 sollen die gemäß den Patentansprüchen benannte Erfindung verdeutlichen:
Die Hüllen können ebenso zur Erhöhung der Lagerungszeit der fertigen Würste die Barriereeigenschaften eine wassersperrende und sauerstoffsperrende Schicht aus einem PVDC-Lack in einer Stärke von 10 µm enthalten.

**Tabelle 1**

| **Rezeptur für Rauchmischung über Innenblase aufgetragen** | **Rezeptur 1 [Gew.-%]** | **Rezeptur 2 [Gew.-%]** | **Rezeptur 3 [Gew.-%]** |
|---|---|---|---|
| Enviro 24/Red Arrow | 75 | 75 | 80 |
| 10 %ige Trinatriumphosphatlösung | 0 | 5 | 0 |
| 60 %ige Dikaliumhydrogenphosphatlösung | 5 | 0 | 0 |
| Propandiol | 18 | 18 | 18 |
| 50 %ige NaOH Lösung | 2 | 2 | 2 |
| Aufnahmemenge zum Trockengewicht Darm | 30 | 30 | 30 |
| Menge an reinem Phosphat bezogen auf Eingangsgewicht unbehandelter Darm | 0,9 | 0,075 | 0 |

### Prüfungen:

### 1. Zählung Anzahl Verfärbungspunkte:

Die nach den Beispielen hergestellten Darmsorten werden im flachgelegten Zustand visuell auf beiden Seiten betrachtet. Bei der Betrachtung soll die Anzahl der Farbreaktionen in Form von schwarzen Flecken gezählt werden. Bei einer Mindestgröße von 1 mm Durchmesser werden sie in die Zählung aufgenommen.

Anschließend wird die gezählte Menge der Verfärbungen in die Liste übertragen und je höher die Anzahl der Verfärbungen, desto schlechter fällt die Benotung aus.

### 2. Widerstand gegen Verfärbungen bei Eisenkontakt

Eine Teilfläche der mit Rauch imprägnierten Schlauchhülle wird im flachgelegtem Zustand mit einem Eisenstück (hier Flacheisen in der Qualität St 37 in den Maßen Länge 80 mm, Breite 40mm und Stärke 8 mm) belastet. Die Belastung ist zeitlich auf 30 Minuten bei Umgebungstemperatur begrenzt. Der Untergrund, auf dem der Darm liegt, ist nicht aus Metall. Nach Ablauf der Testzeit wird das Eisen entfernt, und es wird die Kontaktfläche bewertet. Wenn die Farbreaktion derart ist, dass die kontaktierte Fläche und auch die untere Schlauchhüllenlage eine Schwarzverfärbung aufweisen, wird die Note 6 vergeben. Wenn es nach einer Kontaktzeit von 30 Minuten zu keinerlei Verfärbungen gekommen ist, wird die Note 1 vergeben.

Das Beispiel und das entsprechende Vergleichsbeispiel haben immer die gleiche Menge an Phosphat PO₄.

### Beispiel 1 (B1)

Ein Cellulosefaserdarm Kal. 80 (Handelsprodukt Walsroder® FRO 80, Hersteller Case Tech GmbH) hat erfindungsgemäß 30 Gew.-% der oben genannten Mischung 1 innenseitig mit der Blasentechnik, jeweils bezogen auf Trockengewicht Darm, aufgenommen.

### Vergleichsbeispiel 1a (VB1a)

Der in Beispiel 1 verwendete Darm wird innenseitig mit der Mischung 2 in einer Menge von 30 Gew.-% beaufschlagt.

### Vergleichsbeispiel 1b(VB1b)

Der in Beispiel 1 verwendete Darm wird innenseitig mit der Mischung 3 in einer Menge von 30 Gew.-% beaufschlagt.

### Beispiel 2 (B2)

Der außen PVDC-beschichtete Cellulosefaserdarm (Handelsprodukt Walsroder® FVP 90, Hersteller Case Tech GmbH) hat erfindungsgemäß 30 Gew.-%, bezogen auf Trockengewicht Darm, der oben genannten Mischung 1 innenseitig mit der Blasentechnik aufgenommen.

### Vergleichsbeispiel 2a (VB2a)

Der in Beispiel 2 verwendete Darm wird innenseitig mit der Mischung 2 mit der gleichen Menge wie in Beispiel 2 beaufschlagt. Der zweite Test kann bei der Schlauchhülle mit der Außenlackierung nicht durchgeführt werden, da die Farbreaktion nicht durch die Sperrschicht hindurch zu beobachten ist.

### Vergleichsbeispiel 2b (VB2b)

Der in Beispiel 2 verwendete Darm wird innenseitig mit der Mischung 3 mit der gleichen Menge wie in Beispiel 2 beaufschlagt. Der zweite Test kann bei der Schlauchhülle mit der Außenlackierung nicht durchgeführt werden, da die Farbreaktion nicht durch die Sperrschicht hindurch zu beobachten ist.

### Beispiel 3 (B3)

Das Handelsprodukt Celluloseschäldarm im Kaliber 35 hat 30 Gew.-% der oben genannten Mischung 1 innenseitig mit der Blasentechnik, jeweils bezogen auf Trockengewicht Darm, aufgenommen.

### Vergleichsbeispiel 3a (VB3a)

Der in Beispiel 3 verwendete Darm wird mit der Mischung 2 mit den gleichen Mengen wie in Beispiel 3 innenseitig beaufschlagt.

### Vergleichsbeispiel 3b (VB3b)

Der in Beispiel 3 verwendete Darm wird mit der Mischung 3 mit den gleichen Mengen wie in Beispiel 3 innenseitig beaufschlagt.

Das Ergebnis der Prüfungen ist in nachfolgender Tabelle 2 zusammengestellt:

**Tabelle 2**

| **Muster** | | **B1** | **VB1a** | **VB1b** | **B2** | **VB2a** | **VB2b** | **B3** | **VB3a** | **VB3b** |
|---|---|---|---|---|---|---|---|---|---|---|
| Nennkaliber | | 80 | 80 | 80 | 90 | 90 | 90 | 35 | 35 | 35 |
| Anzahl schwarzer Flecken innerhalb von 1 Meter | Anzahl | 0 | 10 | 15 | 0 | 12 | 17 | 0 | 5 | 18 |
| Intensität der Verfärbung bei Eisenkontakt | Note* | 1 | 4 | 5 | ** | ** | ** | 1 | 4 | 5 |

| | | | | | | | | | | |
|---|---|---|---|---|---|---|---|---|---|---|
| *Schulnotenprinzip: 1 = sehr gut, kein Fleck, 5 = mangelhaft, sehr stark, flächig ** nicht anwendbar | | | | | | | | | | |

## Patentansprüche

1. Schlauchförmige cellulosebasierte Lebensmittelhülle behandelt mit einer Zusammensetzung enthaltend Flüssigrauch, **dadurch gekennzeichnet, dass** der Hauptbestandteil des Flüssigrauchs eine ölige Phase ist und als weitere Bestandteile kondensierten und in der öligen Phase gelösten Holzrauch umfasst und die Zusammensetzung Dikaliumhydrogenphosphat enthält und auf der Innenseite der Lebensmittelhülle aufgetragen ist.

2. Lebensmittelhülle nach Anspruch 1, **dadurch gekennzeichnet, dass** die Zusammensetzung mindestens ein Feuchthaltemittel ausgewählt aus Propandiol, Glycerin und Polysorbaten enthält.

3. Lebensmittelhülle nach Anspruch 1 oder 2, **dadurch gekennzeichnet, dass** die Zusammensetzung einen pH-Wert von 4 bis 7 aufweist.

4. Lebensmittelhülle nach einem der vorherigen Ansprüche, **dadurch gekennzeichnet, dass** der Flüssigrauch zusätzlich eine wässrige Phase und als weitere Bestandteile kondensierten und in der wässrigen Phase gelösten Holzrauch umfasst.

5. Lebensmittelhülle nach einem der vorherigen Ansprüche, **dadurch gekennzeichnet, dass** die Zusammensetzung ein oder mehrere andere Phosphate enthalten kann, sofern das Verhältnis Gew.-% von Dikaliumhydrogenphosphat zur Summe der Gew.-% der ein oder mehreren anderen Phosphate größer 1 ist, wobei die Gew.-% jeweils auf die Zusammensetzung bezogen sind.

6. Lebensmittelhülle nach einem der vorherigen Ansprüche, **dadurch gekennzeichnet, dass** die Zusammensetzung keine anderen Phosphate außer Dikaliumhydrogenphosphat enthält.

7. Lebensmittelhülle nach einem der vorherigen Ansprüche, **dadurch gekennzeichnet, dass** die Zusammensetzung 2 bis 10 Gew.-% Wasser und 1 bis 5 Gew.-% Dikaliumhydrogenphosphat in gelöster Form enthält, wobei das Gew.-Verhältnis Wasser zu Dikaliumhydrogenphosphat zwischen 85:15 und 65:35 liegt.

8. Lebensmittelhülle nach einem der vorherigen Ansprüche, **dadurch gekennzeichnet, dass** die Lebensmittelhülle ausgewählt ist aus Cellulosedarm, Cellulosefaserdarm oder cellulsosebasiertem Textildarm.

9. Verwendung von Dikaliumhydrogenphosphat als Bestandteil einer schlauchförmigen cellulosebasierten Lebensmittelhülle, **dadurch gekennzeichnet, dass** die Lebensmittelhülle auf der Innenseite mit einer Zusammensetzung enthaltend Flüssigrauch behandelt ist, wobei der Hauptbestandteil des Flüssigrauchs eine ölige Phase ist und als weitere Bestandteile kondensierten und in der öligen Phase gelösten Holzrauch umfasst und das Dikaliumhydrogenphosphat in der Zusammensetzung enthalten ist.

## Claims

1. A tubular cellulose-based food casing, treated with a composition containing liquid smoke, **characterized in that** the main component of the liquid smoke is an oily phase, and which comprises, as further components, condensed wood smoke dissolved in the oily phase, and that the composition contains dipotassium hydrogen phosphate applied to the inside of the food casing.

2. The food casing according to claim 1, **characterized in that** the composition contains at least one humectant selected from propanediol, glycerol and polysorbates.

3. The food casing according to claim 1 or 2, **characterized in that** the composition has a pH of 4 to 7.

4. The food casing according to any one of the preceding claims, **characterized in that** the liquid smoke additionally contains an aqueous phase and comprises, as further components, condensed wood smoke dissolved in the aqueous phase.

5. The food casing according to any one of the preceding claims, **characterized in that** the composition may contain one or more other phosphates, provided that the ratio of the wt% of dipotassium hydrogen phosphate to the sum of the wt% of the one or more other phosphates is greater than 1, the wt% each being based on the composition.

6. The food casing according to any one of the preceding claims, **characterized in that** the composition does not contain any other phosphates than dipotassium hydrogen phosphate.

7. The food casing according to any one of the preceding claims, **characterized in that** the composition contains 2 to 10 wt% of water and 1 to 5 wt% of dipotassium hydrogen phosphate in dissolved form, wherein the weight ratio of water to dipotassium hydrogen phosphate is between 85:15 and 65:35.

8. The food casing according to any of the preceding claims, **characterized in that** the food casing is selected from a cellulose casing, a cellulose fiber casing or a cellulose-based textile casing.

9. The use of dipotassium hydrogen phosphate as a component of a tubular cellulose-based food casing, **characterized in that** the food casing is treated on the inside with a composition containing liquid smoke, wherein the main component of the liquid smoke is an oily phase, and which comprises, as further components, condensed wood smoke dissolved in the oily phase, and the dipotassium hydrogen phosphate is contained in the composition.

## Revendications

1. Enveloppe pour aliments en forme de flexible et à base de cellulose qui est traitée avec une composition contenant de la fumée liquide, **caractérisée par le fait que** le composant principal de la fumée liquide est une phase huileuse et comprend, en tant qu'autres composants, de la fumée de bois condensée et dissoute dans la phase huileuse et que la composition contient de l'hydrogénophosphate dipotassique et est appliquée sur la face intérieure de l'enveloppe pour aliments.

2. Enveloppe pour aliments selon la revendication 1, **caractérisée par le fait que** la composition contient au moins un humectant choisi parmi le propanediol, le glycérol et les polysorbates.

3. Enveloppe pour aliments selon la revendication 1 ou 2, **caractérisée par le fait que** la composition présente une valeur pH comprise entre 4 et 7.

4. Enveloppe pour aliments selon l'une quelconque des revendications précédentes, **caractérisée par le fait que** la fumée liquide comprend en sus une phase aqueuse ainsi que, en tant qu'autres composants, de la fumée de bois condensée et dissoute dans la phase aqueuse.

5. Enveloppe pour aliments selon l'une quelconque des revendications précédentes, **caractérisée par le fait que** la composition peut contenir un ou plusieurs autres phosphates, à condition que le rapport en % en poids d'hydrogénophosphate dipotassique à la somme des % en poids dudit un ou desdits plusieurs autres phosphates soit supérieur à 1, les % en poids se rapportant chacun à la composition.

6. Enveloppe pour aliments selon l'une quelconque des revendications précédentes, **caractérisée par le fait que** la composition ne contient pas d'autres phosphates que l'hydrogénophosphate dipotassique.

7. Enveloppe pour aliments selon l'une quelconque des revendications précédentes, **caractérisée par le fait que** la composition contient entre 2 et 10 % en poids d'eau et entre 1 et 5 % en poids d'hydrogénophosphate dipotassique sous forme dissoute, dans lequel le rapport pondéral de l'eau à l'hydrogénophosphate dipotassique est compris entre 85 : 15 et 65 : 35.

8. Enveloppe pour aliments selon l'une quelconque des revendications précédentes, **caractérisée par le fait que** l'enveloppe pour aliments est choisie parmi un boyau en cellulose, un boyau en fibre de cellulose ou un boyau textile à base de cellulose.

9. Utilisation d'hydrogénophosphate dipotassique en tant que composant d'une enveloppe pour aliments en forme de flexible et à base de cellulose, **caractérisée par le fait que** l'enveloppe pour aliments est traitée sur la face intérieure avec une composition contenant de la fumée liquide, dans laquelle le composant principal de la fumée liquide est une phase huileuse et comprend, en tant qu'autres composants, de la fumée de bois condensée et dissoute dans la phase huileuse et que l'hydrogénophosphate dipotassique est contenu dans la composition.
